Europäisches Patentamt

European Patent Office

Office européen des brevets

(11) Publication number: **0 439 755 B1**

# EUROPEAN PATENT SPECIFICATION

(45) Date of publication of patent specification: **01.03.95**

(51) Int. Cl.⁶: **C08F 283/06**, C08F 291/08, C08G 18/63, C08F 4/34

(21) Application number: **90124088.7**

(22) Date of filing: **13.12.90**

(54) **Process for preparing graft polyols and the polyols prepared thereby.**

(30) Priority: **29.01.90 US 471441**

(43) Date of publication of application:
**07.08.91 Bulletin 91/32**

(45) Publication of the grant of the patent:
**01.03.95 Bulletin 95/09**

(84) Designated Contracting States:
**BE DE ES FR GB IT NL**

(56) References cited:
**EP-A- 0 091 036
EP-A- 0 259 537
US-A- 4 242 249**

(73) Proprietor: **BASF Corporation
9 Campus Drive
Parsippany, NJ 07054 (US)**

(72) Inventor: **Heyman, Duane Allen
1902 S. Raisinville Road
Monroe,
Michigan 48161 (US)**

(74) Representative: **Mutzbauer, Helmut, Dr. et al
BASF Aktiengesellschaft,
Patentabteilung ZDX - C 6
D-67056 Ludwigshafen (DE)**

## Description

The subject invention pertains to the field of graft polymer polyol dispersions. More particularly, the subject invention pertains to the use of t-amyl peroxy(2-ethylhexanoate) as a free radical polymerization initiator in the preparation of stable, high solids graft polymer polyol dispersions having low viscosity.

Graft polymer polyol dispersions are well established commercial products. These dispersions are prepared by the in situ free radical polymerization of one or more unsaturated monomers, preferably acrylonitrile and styrene, in a carrier polyol. The carrier polyol may be selected from a wide variety of polyols, but is preferably a polyester polyol or polyether polyol. Solids contents of the dispersion may range from less than 10 weight percent to over 60 weight percent, with most commercial products lying within the 20 to 50 weight percent range. High solids content graft polyols generally require special processing conditions.

The viscosity of dispersions prepared by any given method varies with the solids content; as the solid content rises, the viscosity increases. However, in general it is desirable to prepare low viscosity products, and thus attempts have constantly been made to develop graft polymer polyol dispersions which have low viscosities even when the solids content is high.

The viscosity of graft polymer polyol dispersions is dependent on the polymer particle size as well. When the particle size is exceptionally small, the resulting high surface area leads to increased viscosity. However, if the particle size is too large, the dispersions are frequently unstable, being prone to settling of the dispersed phase. Thus processes for preparing stable, low viscosity, high solids graft polymer polyol dispersions must obtain an optimal particle size.

In U.S. Patent 4,172,825, graft polymer polyol dispersions are prepared by the in situ polymerization of styrene, $\alpha$-methylstyrene, acrylonitrile, or methacrylonitrile in polyether polyols utilizing t-alkyl peroxyester catalysts. The examples of 4,172,825 do not utilize t-amyl peroxy(2-ethylhexanoate), but utilize other peroxyesters, particularly t-butyl peroxyoctoate. However, the graft polyols prepared by the processes of 4,172,825 must conform to very specific acrylonitrile/styrene ratios which are dependent on the molecular weight of the carrier polyol and the solids content. For example, solids content is limited to about 45 weight percent regardless of the acrylonitrile/styrene ratio. When the acrylonitrile/styrene ratio is less than 70/30, no acceptable products may be prepared which contain high solids content, i.e., greater than 20 weight percent solids.

In U.S. Patent 4,804,775, t-alkyl peroxyesters are disclosed as useful in preparing graft polyols in a process where a combination chaser catalyst consisting of a monoperoxycarbonate and a diperoxyketal or a peroxyester follows initial polymerization. The use of t-amyl peroxy(2-ethylhexanoate) to initiate polymerization of the reaction of a 50:50 acrylonitrile/styrene monomer mixture without the use of the chaser catalyst mixture led to a 20 weight percent solids dispersion having a Brookfield viscosity of 4500 cP. When the proper combination of chaser catalysts is used, the product viscosity drops to 3400 cP. When the solids content is raised only 5 weight percent to 25 weight percent solids, the viscosity of the dispersion is 5700 cp even when chaser catalysts are utilized.

In U.S. Patent 4,454,255, is disclosed a process for preparing a white, stable, low viscosity graft polymer polyol dispersion by the in situ free radical initiated polymerization of unsaturated monomers, preferably acrylonitrile and styrene, in a carrier polyol containing less than about 0.09 moles of induced unsaturation per mole of polyol and in the presence of a reaction moderator. Preferred free radical initiators are azo catalysts such as 2,2'-azo-bis(isobutyronitrile), 2,2'-azo-bis(methylbutyronitrile), and 2,2'-azo-bis(2,4-dimethylvaleronitrile). With the process of 4,454,255, stable graft polyol dispersions having greater than 30 weight percent solids may be prepared. However, some of the azo type catalysts produce environmentally unacceptable byproducts, while others are expensive. Moreover, peroxy type catalysts generally abstract hydrogen from the carrier polyol leading to crosslinking and higher viscosities.

It has now been surprisingly discovered that the polymerization of one or more unsaturated monomers through the use of a free radical initiator comprising t-amyl peroxy-(2-ethylhexanoate) in the presence of a reaction moderator, in a carrier polyol containing from 0.001 to about 0.3 moles of induced unsaturation per mole of polyol, results in graft polymer polyol dispersions having low viscosities while other t-alkyl peroxyester catalysts such as t-butyl peroxyoctoate produce dispersions generally having higher viscosities. When t-amyl peroxy(2-ethylhexanoate) is used in the process of the subject invention, low viscosity graft polyol dispersions may be prepared despite the inability of this same catalyst to form low viscosity dispersions at high solids levels in processes such as those disclosed in U.S. 4,172,825 and 4,804,775.

The process of the subject invention, but for the use of a free radical initiator comprising t-amyl peroxy-2-ethylhexanoate, is disclosed in columns 2 through column 8 of U.S. Patent 4,454,255. In general, to a polyether of polyester polyol is added less then about 0.3 mole, preferably less than 0.1 mole of induced

2

unsaturation per mole of the total polyol mixture through the addition of a macromer created by reacting a polyol with an unsaturated moiety. Preferred macromers are prepared by reacting maleic anhydride with a polyether polyol as taught by U.S. Patent 4,458,038. The maleate unsaturation is preferably isomerized to fumarate unsaturation. Suitable carrier polyols include the common polyols used in preparing polyurethanes.

Hydroxyl group-containing compounds (polyols) useful in the preparation of graft polymer polyol dispersions are described in the Polyurethane Handbook in chapter 3, §3.1 pages 42-61; and in Polyurethanes: Chemistry and Technology in Chapter II, §§III and IV, pages 32-47. Many hydroxyl-group containing compounds may be used, including simple aliphatic glycols, dihydroxy aromatics, bisphenols, and hydroxyl-terminated polyethers, polyesters, and polyacetals, among others. Extensive lists of suitable polyols may be found in the above references and in many patents, for example in columns 2 and 3 of U.S. Patent 3,652,639; columns 2-6 of U.S. Patent 4,421,872; and columns 4-6 of U.S. Patent 4,310,632.

Preferably used are hydroxyl-terminated polyoxyalkylene and polyester polyols. The former are generally prepared by well known methods, for example by the base catalysed addition of an alkylene oxide, preferably ethylene oxide (oxirane), propylene oxide (methyloxirane) or butylene oxide (ethyloxirane) onto an initiator molecule containing on the average two or more active hydrogens. Examples of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine; trihydric initiators such as glycerine, trimethylolpropane, trimethylolethane, N-alkyl-phenylenediamines, mono-, di-, and trialkanolamines; tetrahydric initiators such as ethylene diamine, propylenediamine, 2,4'-, 2,2'-, and 4,4'-methylenedianiline, toluenediamine, and pentaerythritol, pentahydric initiators such as diethylenetriamine; and hexahydric and octahydric initiators such as sorbitol and sucrose.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and Technology as well as in many patents, for example U.S. Patents 1,922,451; 2,674,619; 1,922,459; 3,190,927; and 3,346,557.

Polyester polyols also represent preferred polyols. Such polyesters are well known in the art and are prepared simply by polymerizing polycarboxylic acids or their derivatives, for example their acid chlorides or anhydrides, with a polyol. Numerous polycarboxylic acids are suitable, for example malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example the various aliphatic glycols, trimethylolpropane and trimethylolethane, $\alpha$-methylglucoside, and sorbitol. Also suitable are low molecular weight polyoxyalkylene glycols such as polyoxyethylene glycol, polyoxypropylene glycol, and block and heteric polyoxyethylene-polyoxypropylene glycols. These lists of dicarboxylic acids and polyols are illustrative only, and not limiting. An excess of polyol should be used to ensure hydroxyl termination. Methods of preparation of such polyester polyols are given in the Polyurethane Handbook and in Polyurethanes: Chemistry and Technology.

More particularly, the subject process comprises conducting the polymerization of an ethylenically unsaturated monomer or mixtures of monomers in the presence of an effective amount of a free-radical polymerization initiator comprising t-amyl peroxy(2-ethylhexanoate) in an unsaturated polyol mixture containing from 0.001 to 0.3 moles preferably less than 0.1 mole of induced unsaturation per mole of the total polyol mixture as defined in claim 1. In a preferred embodiment of the invention the polymerization of an ethylenically unsaturated monomer or mixture of monomers in the presence of an effective amount of this free radical initiator in a polyol mixture containing from 0.001 to 0.3 mole of unsaturation per mole of the total polyol mixture employs as part of the mixture a polyetherester polyol prepared by the reaction of a polyoxyalkylene polyether polyol with maleic anhydride and an alkylene oxide.

The polyetherester polyol is preferably isomerized to contain fumarate unsaturation by methods well known by those skilled in the art. These include heat, or isomerization catalysts such as morpholine, dibutylamine, diethylamine, diethanolamine, and thiols. The polyetherester polyol itself may be prepared by the reaction of a polyoxyalkylene ether polyol, a polycarboxylic acid anhydride to form a half acid ester and an alkylene oxide to obtain a product having an acid number of less than 5 mg KOH/gram by conducting the reaction between the polyoxyalkylene polyether polyol and anhydride and the following reaction with the alkylene oxide in the presence of an effective amount of a catalyst selected from the group consisting of salts and oxides of divalent metals. The resultant polyetherester polyols having induced unsaturation are hereinafter referred to as "macromers". The alkylene oxides which may be employed for the preparation of the polyetherester polyols include ethylene oxide, propylene oxide, butylene oxide, amylene oxide and mixtures of these oxides. Other unsaturation-containing macromers are also suitable, such as those prepared by reacting a polyol with ethylfumarylchloride, an alkylene substituted isocyanatobenzene, or an isocyanatoalkylacrylate.

When preparing the polyetherester polyol in a process employing a catalyst selected from the group consisting of salts and oxides of divalent metals, the concentration of catalyst which may be employed ranges from 0.005 to 0.5 weight percent based on the weight of polyol mixture. The temperatures employed range from 75C to 175C. The equivalent weight of the macromer may vary from 1000 to 10,000, preferably from 2000 to 6000.

Among the divalent metals which may be employed are: zinc acetate, zinc chloride, zinc oxide, zinc neodecanoate, tin chloride, calcium naphthenate, calcium chloride, calcium oxide, calcium acetate, copper naphthenate, cadmium acetate, cadmium chloride, nickel chloride, manganese chloride, and manganese acetate. Certain of these catalysts such as calcium naphthenate promote the isomerization of the maleate to the fumarate structure during the preparation of the macromer, while others such as zinc chloride, which is an effective catalyst for the polymerization, inhibit this isomerization.

Chain transfer agents are employed as reaction moderators. The polymerization reaction may be carried out at temperatures between 25C and 180C, preferably between 80C and 135C. The polyol mixture contains preferably less than 0.1 mole of unsaturation per mole of polyol mixture and more preferably ranges from 0.001 to 0.09 mole of unsaturation.

Among those chain transfer agents which may be employed are as follows: acetic acid, bromoacetic acid, chloroacetic acid, ethyl dibromoacetate, iodoacetic acid, tribromoacetic acid, ethyl tribromoacetate, trichloroacetic acid, ethyl trichloroacetate, acetone, p-bromophenylacetonitrile, p-nitrophenylacetylene, allyl alcohol, 2,4,6-trinitroaniline, p-ethynylanisole, 2,4,6-trinitroanisole, azobenzene, benzaldehyde, p-benzoquinone, p-cyanobenzaldehyde, 2-butylbenzene, bromobenzene, 1,3,5-trinitrobenzene, benzochrysene, ethyl trinitrobenzoate, benzoin, benzonitrile, benzopyrene, tributylborane, 2-butanone, 1,4-butanediol, 3,4-epoxy-2-methyl-1-butene, t-butyl ether, t-butyl isocyanide, 1-phenylbutyne, p-cresol, p-bromocumene, dibenzonaphthacene, p-dioxane, pentaphenyl ethane, ethanol, 1,1-diphenylethylene, ethylene glycol, ethyl ether, fluorene, N,N-dimethylformamide, 2-heptene, 2-hexene, isobutyraldehyde, diethyl bromomalonate, bromotrichloromethane, dibromoethane, diiodomethane, naphthalene, 1-naphthol, 2-naphthol, methyl oleate, 2,4,4-triphenyl-1-pentene, 4-methyl-2-pentene, 2,6-diisopropylphenol, phenyl ether, phenylphosphine, diethylphosphine, dibutylphosphine, phosphorus trichloride, 1,1,1-tribromopropane, dialkyl phthalate, 1,2-propanediol, 3-phosphinopropionitrile, 1-propanol, pyrocatechol, pyrogallol, methyl stearate, tetraethylsilane, triethylsilane, dibromostilbene, α-methylstyrene, tetraphenyl succinonitrile, 2,4,6-trinitrotoluene, p-toluidine, N,N-dimethyl-p-toluidine, α-cyano-p-tolunitrile, α,α'-dibromo-p-xylene, 2,6-xylenol, diethyl zinc, dithiodiacetic acid, ethyl dithiodiacetic acid, 4,4'-dithio-bisanthranilic acid, benzenethiol, o-ethoxybenzenethiol, 2,2-dithiobisbenzothiazole, benzyl sulfide, 1-dodecanethiol, ethanethiol, 1-hexanethiol, 1-napthalenethiol, 2-napthalenethiol, 1-octanethiol, 1-heptanethiol, 2-octanethiol, 1-tetradecanethiol, α-toluenethiol, isopropanol, 2-butanol, morpholine, triethylamine, carbon tetrabromide, and tertiary dodecyl mercaptan. Also suitable are higher alcohols such as 1-butanol, 1-propanol, octanol, and decanol.

The chain transfer agents employed will depend on the particular monomers or mixtures of monomers employed and the molar ratios of such mixtures. The concentration of the chain transfer agent which is employed may range from 0.1 to 30 percent by weight based on the weight of the monomer. Alcohol chain transfer agents in particular are used at higher concentrations.

The unsaturated polyols or macromers which are employed in the present invention may be prepared by the reaction of any conventional polyol such as those described above with an organic compound having both ethylenic unsaturation and a carboxyl, anhydride, isocyanate or epoxy group or they may be prepared by employing an organic compound having both ethylenic unsaturation and a hydroxyl, carboxyl, anhydride, or epoxy group as a reactant in the preparation of the conventional polyol. Representative of such organic compounds include unsaturated mono- and polycarboxylic acids and anhydrides such as maleic acid and anhydride, fumaric acid, crotonic acid and anhydride, propenyl succinic anhydride, acrylic acid, acryoyl chloride, hydroxyethyl acrylate or methacrylate and halogenated maleic acids and anhydrides, unsaturated polyhydric alcohols such as 2-butene-3,4-diol, unsaturated epoxides such as 1-vinylcyclohexene-3,4-epoxide, butadiene monoxide, vinyl glycidyl ether(1-vinyloxy-2,3-epoxy propane), glycidyl methacrylate and 3-allyloxypropylene oxide (allyl glycidyl ether). If a polycarboxylic acid or anhydride is employed to incorporate unsaturation into the polyols, it is preferable to react the unsaturated polyol with an alkylene oxide, preferably ethylene or propylene oxide, to replace the carboxyl groups with hydroxyl groups prior to employment in the present invention. The amount of alkylene oxide employed is such as to reduce the acid number of the unsaturated polyol to 5 or less.

Acrylonitrile and styrene or other unsaturated monomers such as those disclosed in column 7 of U.S. Patent 4,454,255 are then added over a course of time along with the reaction moderator and free radical initiator, generally dissolved in additional polyol. The acrylonitrile to styrene ratio may vary between 0/100 to 100/0, for example the acrylonitrile to styrene ratio may be greater than 2/3 and preferably greater than 1/1. The most preferred range is between 2/1 and 1/2. Preferred monomers other than styrene and acrylonitrile include $\alpha$-methylstyrene, methacrylonitrile, acrylic acid, methacrylic acid, methyl methacrylate, and methyl acrylate. The amount of ethylenically unsaturated monomer employed in the polymerization reaction is generally from 25 percent to 60 percent, preferably from 30 percent to 45 percent, based on the total weight of the product. The polymerization occurs at a temperature between 25C and 180C, preferably from 80C to 135C.

The subject invention will now be illustrated by the following examples. In the examples, the reaction takes place in a 4-neck 1 liter borosilicate glass reaction flask. The reaction temperature was maintained at 125C. The initial charge consists of 9.0g of a macromer prepared as indicated by Examples A-C, and 171.0g of a carrier polyol. The unsaturated monomers were mixed together, and the reaction moderator, in the examples either 1-dodecanethiol (DDM) or bromotrichloromethane (BTCM), added to the monomer mixture. The monomer mixture was added to the flask over a period of 210 minutes. The free radical initiator was dissolved in an additional 180.0g of polyol and added over a period of 220 minutes, the beginning of this addition period coinciding with the start of monomer addition. Both the monomer/reaction moderator stream as well as the free radical initiator stream were fed into the reaction flask through a Kenics static mixture to ensure thorough mixing. Following all additions, the reaction was allowed to proceed for an additional 30 minutes, following which the reaction mixture was stripped at 1.33 mbar (1 torr) for an additional 30 minutes. The resulting graft polymer polyol dispersion was then stabilized by the addition of 0.15 weight percent of a 2:1 mixture of butylated hydroxytoluene and phenyldiisodecylphosphite.

## Examples A-C, Macromer Preparation

Two macromers were prepared as follows. For macromer A, 1000g of a trimethylolpropane initiated polyoxypropylene-polyoxyethylene polyol having a hydroxyl number of 26.5 and a 5 weight percent polyoxyethylene cap was changed to a 3785 cm$^3$ (1 gallon) steam heated stainless steel autoclave and stripped at 105C at less than 13.33 mbar (10 torr) to a water content of less than 0.02 weight percent. At 105C, 5.0g of a 40 weight percent solution of calcium naphthenate and 17.4g maleic anhydride were added with stirring under a nitrogen blanket. The reaction temperature was raised to 125C and held for one hour, all under nitrogen. The reactor was then heated to 135C, evacuated to 133.3 mbar (100 torr), and sealed. Propylene oxide, 63.0g, was added in two equal portions 30 minutes apart. The reactor was maintained at 135C for eight hours following which the product was stripped at 105C and less than 13.33 mbar (10 torr) for one hour. The product was stabilized with 0.05 weight percent butylated hydroxytoluene and 0.02 weight percent phenyldiisodecylphosphite. This macromer, macromer A, contained approximately 0.4 moles of fumarate unsaturation per mole of polyol.

Macromer B was prepared in the same manner as utilized for macromer A except that the polyol used was a polyoxypropylene-polyoxyethylene glycerine initiated polyether polyol having a 5 weight percent polyoxyethylene cap and a hydroxyl number of 25.

Macromer C was prepared by the reaction of the same polyether polyol used to prepare macromer A with 0.6 moles of dimethyl-m-isopropenylbenzylisocyanate per mole of polyol. Macromer C contains approximately 0.6 moles unsaturation per mole of polyol.

## Examples 1 - 7 and Comparison Examples

The procedure as set forth previously was followed with various acrylonitrile/styrene ratios at nominal solids contents of 40 and 50 weight percent. In the Examples, the 3000 mw polyol is a glycerine initiated polyoxypropylene polyoxyethylene polyether polyol having a nominal functionality of 2.8 and a hydroxyl number of 51. Of the polyoxyalkylene portion, 10 percent is present as a polyoxypropylene cap, the remainder is a heteric containing approximately 12.5 weight percent of polyoxyethylene units. The 700 molecular weight polyol is a propylene glycol initiated polyoxypropylene polyol having a nominal functionality of 2.0 and a hydroxyl number of 145. The 4200 molecular weight polyol is a glycerine initiated polyoxypropylene polyol with an 18.5 weight percent polyoxyethylene cap, a nominal functionality of 2.6, and a hydroxyl number of 35.

The subject invention examples all utilize t-amyl peroxy(2-ethylhexanoate) as free radical polymerization initiator, while the comparison examples having the same number utilize t-butyl peroxy(2-ethylhexanoate) as polymerization initiator except for example 1C' which uses azobis[2-methylbutyronitrile]. Example 1C' indicates that the subject invention dispersions (e.g. Example 1) may achieve approximately the same viscosities as those of conventional dispersions but without the use of azo type polymerization initiators. The comparison examples C, C', C'' and C''' otherwise correspond to the subject invention having the same number. The results of side by side comparisons are given below in Table I.

TABLE I

| Example | Carrier Polyol Mol. Wt. | Functionality | Macromer | Initiator[1] Amount/Type | Reaction Moderator[2] Amount/Type | Monomer[3] Ratio | Vinyl Solids, Wt. % | Viscosity, mPas |
|---|---|---|---|---|---|---|---|---|
| 1 | 3000 | 2.8 | 9.0(A) | 1.5/t-A | 2.4/DDM | 1:2 | 38.6 | 5240 |
| 1C | 3000 | 2.8 | 9.0(A) | 1.5/t-B | 2.4/DDM | 1:2 | 38.5 | 6600 |
| 1C' | 3000 | 2.8 | 9.0(A) | 1.5/ABN | 2.4/DDM | 1:2 | 38.6 | 4940 |
| 1C'' | 3000 | 2.8 | – | 1.5/t-B | No Mod Used | 1:2 | coagulated[4] | |
| 1C''' | 3000 | 2.8 | – | 1.5/t-A | No Mod Used | 1:2 | coagulated[4] | |
| 2 | 3000 | 2.8 | 9.0(A) | 0.6/t-A | 2.4/DDM | 1:2 | 37.7 | 3850 |
| 2C | 3000 | 2.8 | 9.0(A) | 0.6/t-B | 2.4/DDM | 1:2 | 37.7 | 4220 |
| 3 | 3000 | 2.8 | 9.0(A) | 1.2/t-A | 2.4/BTCM | 2:1 | 39.0 | 3990 |
| 3C | 3000 | 2.8 | 9.0(A) | 1.2/t-B | 2.4/BTCM | 2:1 | 38.8 | 5920 |
| 3C'' | 3000 | 2.8 | – | 1.5/t-B | No Mod Used | 2:1 | coagulated[4] | |
| 3C''' | 3000 | 2.8 | – | 1.5/t-A | No Mod Used | 2:1 | coagulated[4] | |
| 4 | 700 | 2.0 | 12.0(A) | 1.5/t-A | 3.0/DDM | 1:2 | 48.3 | 3420 |
| 4C | 700 | 2.0 | 12.0(A) | 1.5/t-B | 3.0/DDM | 1:2 | 48.3 | 3240 |
| 5 | 4200 | 2.6 | 9.0(B) | 1.5/t-A | 2.4/DDM | 1:2 | 38.6 | 10690 |
| 5C | 4200 | 2.6 | 9.0(B) | 1.5/t-B | 2.4/DDM | 1:2 | 38.3 | 9260 |
| 6 | 3000 | 2.8 | 15.0(C) | 1.5/t-A | 2.5/DDM | 1:2 | 38.8 | 4540 |
| 7 | 3000 | 2.8 | 9.0(A) | 1.8/t-A | 2.4/DDM | 1:2 | 38.7 | 5160 |
| 7C | 3000 | 2.8 | 9.0(A) | 1.8/t-B | 2.4/DDM | 1:2 | 38.5 | 8860 |

1. Initiators used were t-butyl peroxy(2-ethylhexanoate) (t-B), t-amyl peroxy(2-ethylhexanoate) (t-A), and N,N'-azobis (2-methylbutryonitrile) (ABN). Amount in grams.

2. Reaction moderators used were 1-dodecylmercaptan (DDM) and bromotrichloromethane (BTCM). Amount in grams.

3. Acrylonitrile/styrene ratio.

4. Coagulated before 50% of the total monomer was added.

The data presented in Table I indicates that t-amyl peroxy(2-ethylhexanoate), when utilized in the process of the subject invention wherein the polymerization is conducted <u>in situ</u> in a carrier polyol containing a minor amount of induced unsaturation in the presence of a reaction moderator results in stable, high solids graft polymer polyol dispersions generally having lower viscosities than when t-butyl peroxy(2-ethylhexanoate) is utilized. The table further shows that when the subject invention process is used, graft polymer polyol dispersions containing in excess of 35 weight percent preferably 45 weight percent solids can be prepared, in contrast to the teachings of U.S. 4,172,825, wherein 45 weight percent solids polyols are said to be unacceptable products.

The table further shows that graft polyols may be prepared by the subject process with acrylonitrile:styrene ratios of 1:2 at solids contents greater than 30 weight percent, whereas the process of U.S. 4,172,825 yields only unacceptable products at this acrylonitrile/styrene ratio and solids contents greater than about 25 weight percent. Finally, actual side by side examples show that when either t-butyl peroxyoctoate or t-amyl peroxyoctoate are used in the process of U.S. 4,172,825, to prepare high solids graft polyols without the presence of induced unsaturation or reaction moderator as required by the subject invention, that coagulation occurs, regardless of whether a 2:1 or 1:2 acrylonitrile styrene ratio is utilized.

**Claims**

1. A process for the preparation of stable, low viscosity graft polymer polyol dispersions containing greater than 30 weight percent solids by the <u>in situ</u> free radical initiated polymerization of one or more unsaturated monomers in the presence of a chain transfer agent reaction moderator in a polyol mixture containing from 0.001 to 0.3 moles of induced unsaturation per mole of the total polyol mixture through the addition of a macromer created by reacting a polyol with an unsaturated moiety, comprising: selecting as the free radical polymerization initiator, a free radical polymerization initiator comprising t-amyl peroxy(2-ethylhexanoate).

2. The process of claim 1 wherein the unsaturated monomers are acrylonitrile and styrene in a ratio greater than 1:1.

3. The process of claim 1 or 2 wherein the solids content is greater than 35 weight percent.

4. The process of claim 1 wherein the solids content is greater than 45 weight percent.

5. The process of claim 1 wherein the unsaturated monomers are acrylonitrile and styrene in a ratio greater than 2:3.

**Patentansprüche**

1. Verfahren zur Herstellung von stabilen, niedrigviskosen Propfpolymer-Polyol-Dispersionen mit einem Feststoffgehalt von mehr als 30 Gew.-% durch radikalisch iniziierte in-situ-Polymerisation eines oder mehrerer ungesättigter Monomerer in Gegenwart eines aus einem Kettenübertragungsmittel bestehenden Reaktionsmoderators in einer Polyolmischung mit 0,001 bis 0,3 Mol induzierte Ungesättigtheit pro Mol Gesamtpolyolmischung durch Zugabe eines Makromers, das durch Umsetzung eines Polyols mit einer ungesättigten Gruppierung gebildet wurde, und eines Initiators für die radikalische Polymerisation dadurch gekennzeichnet, daß man als Initiator Peroxy(2-ethylhexansäure-t-amylester) verwendet.

2. Verfahren nach Anspruch 1, dadurch gekennzeichnet, daß die ungesättigten Monomeren in einem Verhältnis von größer als 1:1 aus Acrylnitril und Styrol bestehen.

3. Verfahren nach Anspruch 1 oder 2, dadurch gekennzeichnet, daß der Feststoffgehalt mehr als 35 Gew.-% beträgt.

4. Verfahren nach Anspruch 1, dadurch gekennzeichnet, daß der Feststoffgehalt mehr als 45 Gew.-% beträgt.

5. Verfahren nach Anspruch 1, dadurch gekennzeichnet, daß die ungesättigten Monomeren in einem Verhältnis von größer als 2:3 aus Acrylnitril und Styrol bestehen.

**Revendications**

1. Procédé pour la préparation de dispersions stables de polymère-polyol greffé à basse viscosité, contenant plus de 30 pour cent en poids de matière sèche, par la polymérisation à initiation radicalaire *in situ* d'un ou plusieurs monomères insaturés en présence d un agent de transfert de chaîne comme modérateur de réaction dans un mélange de polyols qui contient 0,001 à 0,3 mole d'insaturation induite par mole du mélange de polyols total grâce à l'addition d un macromonomère créé par réaction d'un polyol avec une espèce insaturée, comprenant : le choix, comme initiateur de polymérisation radicalaire, d'un initiateur de polymérisation radicalaire contenant du peroxy(2-éthylhexanoate) de *t*-amyle.

2. Procédé de la revendication 1, dans lequel les monomères insaturés sont l'acrylonitrile et le styrène dans un rapport supérieur à 1:1.

3. Procédé de la revendication 1 ou 2, dans lequel la teneur en matière sèche est supérieure à 35 pour cent en poids.

4. Procédé de la revendication 1, dans lequel la teneur en matière sèche est supérieure à 45 pour cent en poids.

5. Procédé de la revendication 1, dans lequel les monomères insaturés sont l'acrylonitrile et le styrène dans un rapport supérieur à 2:3.